# EUROPÄISCHE PATENTSCHRIFT

(11) **EP 0 645 229 B1**
(45) Veröffentlichungstag und Bekanntmachung des Hinweises auf die Patenterteilung: **12.11.1997**
(21) Anmeldenummer: 94113417.3
(22) Anmeldetag: 27.08.1994
(51) Int. Cl.: B29C 47/00, B29C 44/30

(54) **Verfahren zur kontinuierlichen Herstellung von fliess-, schäum- und härtfähigen Phenolresolharz Mischungen**
Method of continuously producing mixtures from a flowable, foamable and curable phenolresol resin
Procédé de fabrication continu de mélanges à partir de résine résol phénolique fluide, moussante et durcissable

(30) Priorität: 25.09.1993 DE 4332698
(43) Veröffentlichungstag der Anmeldung: 29.03.1995
(73) Patentinhaber: Bakelite AG, 58642 Iserlohn (DE)
(72) Erfinder: Mirgel, Ralf, Dr., D-53332 Bornheim (DE); Vereecke, Antoine, B-8501 Heule (BE)

(56) Entgegenhaltungen:
- EP-A- 0 108 167
- EP-A- 0 154 452
- EP-A- 0 489 534

## Beschreibung

Die Erfindung betrifft ein Verfahren zur kontinuierlichen Herstellung von Formkörpern aus chemisch härte- und schäumfähigen Phenolresolharz-Mischungen.

Die Verarbeitung der Phenolresol-Harze zu Isolationsschaumstoffen ist bekannt. Im allgemeinen werden dabei folgende Komponenten miteinander vermischt:

### Grundkomponenten:

- Phenolresol :: Polykondensationsprodukt von Phenol und Formaldehyd unter Verwendung alkalischer Katalysatoren. Viskositätsbereich: 2.000 bis 120.000 mPa.s (20°C).
- Zellregulatoren:: Oberflächenaktive Verbindung zur Einstellung einer bestimmten Geschlossenzelligkeit.
- Treibmittel :: Niedrigsiedende Kohlenwasserstoffe, H-FCKW, H-FKW oder unter Einwirkkung von Säuren gasabspaltende Verbindungen.
- Härter :: Anorganische oder organische Säuren und deren Gemische oder feste Säuren bzw. Säureanhydride.

### Additive:

- Füllstoffe :: Pulverförmige oder faserige Stoffe, z.B. Bariumsulfat oder Glasfasern.
- Modifizierungsmittel :: Brandschutzmittel in fester oder flüssiger Form, Weichmacher, Farbpigmente zur Einfärbung, Beschleuniger.

Schäumfähige Phenolresolharz-Mischungen können kontinuierlich nicht oder nur unter besonderen Vorkehrungen and allenfalls dann hergestellt werden, wenn feste Komponenten wie Füllstoffe, Modifizierungsmittel oder feste Härter abwesend sind.

In Mischkammern mit geflutetem Mischraum (Behälter mit vorgegebenem Volumen) werden kontinuierlich die Komponenten mittels eines fest eingebauten, hochtourigen Mischelements (z.B. Turbinenrührer, 800 bis 1500 Upm) homogenisiert. Die Komponenten werden über Dosierpumpen mit relativ geringen Drücken in die Mischkammer gefördert, die Vermischung ist im Prinzip drucklos. Bei Phenolresolharz-Schäumen besteht der Nachteil, daß durch das hochtourige Mischen Wärme ins System eingekuppelt wird, die zu einer Temperaturerhöhung des austretenden, schäumfähigen Gemisches führt, so daß es im Extremfall bereits vor dem Eintritt in den Bandkanal zu einem Verdampfen des Treibmittels und somit zu einem Vorschäumen kommt und die Struktur des Schaumstoffs verdirbt. Diesem Effekt kann durch Kühlung der Rohstoffkomponenten sowie der Dosier- und Mischeinheiten nur kurzfristig entgegengewirkt werden.

Hochdruck-Mischkammern eignen sich für die Herstellung von Polyurethan-Schaumstoffen. Deren Mischwirkung beruht darauf, daß die Komponenten unter hohen Drücken über Düsen in eine kleine Mischkammern (Volumen 2 bis 10 cm³) eingespeist werden, wobei ein homogenes, schäum- und härtfähiges Gemisch aus der Kammer austritt. Zur kontinuierlichen Herstellung schäumfähiger Resolharz-Mischungen hat sich aber die Verwendung solcher Hochdruckmischer wegen hoher Treibmittelverluste und ungleichmäßiger Porenstruktur der Resol-Schaumstoffe nicht berwährt.

Falls aber die Schaummischung feste Stoffe enthält, sind beide Mischsysteme ungeeignet. Zum Einmischen eines Feststoffes in ein flüssiges System gibt es zwei Wege:

Einsatz eines Vormischers zur Herstellung eines homogenen Harz-Feststoffgemisches, Zuleitung zum Endmischer, wo die restlichen Flüssigkomponenten zudosiert werden, oder das Anpasten der festen Komponenten mit flüssigen Verbindungen und so Förderung über Dosierpumpen in Mischgeräte mit nachgeschalteten Formanlagen. Außer diesem zusätzlichen Arbeitsgang ist das Verfahren auf solche Fälle beschränkt, bei denen die Feststoffe nicht mit Anpastmittel reagieren. In der EP-A 0 489 534 wird ein Formteil durch Temperatureinwirkung bis 200 °C im Extruder ausgehärtet. Es findet hier keine Säurehärtung statt.
EP-A 0 154 452 beschreibt ein Verfahren zur Herstellung von Laminaten zwischen zwei Deckschichten.
Es ist nun Aufgabe der Erfindung, ein Verfahren zu entwickeln, das ohne die oben beschriebenen Nachteile kontinuierlich ein schäum- und härtefähiges Gemisch herzustellen in der Lage ist.

Gegenstand der Erfindung ist ein Verfahren zur kontinuierlichen Herstellung von Formkörpern aus chemisch härte- und schaumfähigen Resolharz-Mischungen, dadurch gekennzeichnet, daß die Mischung des Harzansatzes mit einem Doppelschneckenextruder ausgeführt wird. So hergestellte Harzmischungen sind überraschend von homogener Konsistenz und einwandfrei fließfähig.

Der Austritt des Doppelschneckenextruders kann als gegebenefalls heizbare Schlitzdüse ausgebildet sein. Die Formgebung der Schaumkörper während des Schäumens und Härtens erfolgt bevorzugt auf einer Doppelbandpresse.

Es hat sich gezeigt, daß die kontinuierliche Herstellung eines homogenen, schäum- und härtfähigen Gemisches aus den eingangs beschriebenen Komponenten, obgleich bisher nicht ausführbar, mittels eines Doppelschneckenextruders erfolgen kann.

Folgende Vorteile treten auf:
Es können sowohl Gemische zur Herstellung geschlossenzelliger - keine Füllstoffe enthaltender - als auch
zur Herstellung offenzelliger - Füllstoffe enthaltender - Schaumstoffe ohne zusätzlichen Arbeitsgang auf der gleichen Maschine produziert werden. Der Füllstoffanteil kann bis zu 300 Gew.-%, bezogen auf Harz, betragen, Die Herstellung eines schäumfähigen Gemisches, das diesen hohen Füllstoffanteil enthält, mittels der herkömmlichen Mischtechniken ist aufgrund der dann auftretenden Viskositäten von über 150.000 mPa.s (20°C) nicht möglich.
200 bis 400 Umdrehungen der Extruderschnecken pro Minute reichen aus, um in einem Arbeitsgang niederviskose Substanzen, wie Treibmittel, mit hochviskosen, wie Harz und Feststoffe, zu einer homogenen Mischung zu verarbeiten.
Durch das niedertourige Mischen von 200 bis 400 Upm werden keine lufthaltigen Blasen eingerührt, die sich störend auf die Zellstruktur der Schaumstoffe auswirken könnten.
Eine merkliche Wärmeeinkupplung mit der Folge des vorzeitigen Schäumens ist nicht zu beobachten.
Der Doppelschneckenextruder ist selbstreinigend, so daß der Einsatz von Lösemitteln, wie Alkohole oder Aceton, zu Reinigungszwecken entfällt.

### Beispiele

In einem Doppelschneckenextruder (Modell Continuo der Fa. Werner & Pfleiderer) wurden folgende in Tabelle 1 aufgeführte Komponenten zur Herstellung fließ-, schäum- und härtefähiger Phenolresolharzmischungen kontinuierlich über Pumpen zugeführt. Das austretende Gemisch wurde in eine kontinuierlich arbeitende Doppelbandpresse, die folgende Daten aufwies, gegeben:
- Länge der Doppelbandpresse: : 20 m
- Abstand Ober- zu Unterband: : 50 mm
- Breite des Doppelbandes: : 1,2 m
- Temperatur der Doppelbandpresse: : 50 bis 60°C.

Das Aufschäumen und Härten des Gemisches erfolgte zwischen dem Unter- und Oberband der Plattenpresse. Von den aus der Bandpresse austretenden Resol-Schaumstoffplatten wurde die Frischdichte bestimmt. Die weiteren aufgeführten Eigenschaften wurden nach Konditionierung der Platten bestimmt.
Bei den Resol-Schaumstoffen handelt es sich in Beispiel 1 um einen Schaumstoff mit einer Geschlossenzelligkeit über 90% und guten Isolationseigenschaften, in den Beispielen 2 und 3 um schwerbrennbare Schaumstoffe mit B-1- bzw. A-2-Klassifizierung nach DIN 4102.

In der Tabelle bedeuten:

| | |
|---|---|
| DYNAPOR Resol 1153 * | Visk. 3.500 mPa/s. (20°C) |
| DYNAPOR Resol 9700/8314 * | Visk. 9.000 mPa/s. (20°C) |
| DYNAPOR-Härter 7153 | Novolak + Phenolsulfonsäure + H₂SO₄ |
| DYNAPOR-Härter 7156 | Cumolsulfonsäure/Toluolsulfonsäure/H₂SO₄ 60/14/8/H₂O |
| DYNAPOR-Härter VW 420 | Cumolsulfonsäure + Polyglykol. |

| | |
|---|---|
| * Schaumharz | |

**Tabelle 1**

| Beispiel-Nr.: | | | | 1 | 2 | 3 |
|---|---|---|---|---|---|---|
| 1. schäumfähiges Reaktionsgemisch | | | | | | |
| 1.1 | DYNAPOR Resol 1153 | | kg/min | - | 7.7 | 3.8 |
| | DYNAPOR Resol 9700/8314 | | kg/min | 7.7 | - | - |
| 1.2 | Pentan | | kg/min | 0.08 | 0.07 | 0.04 |
| 1.3 | Feststoff | | kg/min | - | | |
| | | Borsäure | | | 1.54 | |
| | | Aluminiumhydroxid | | | | 3.8 |
| 1.4 | Härter DYNAPOR 7153 | | kg/min | | | 0.9 |
| | Härter DYNAPOR 7156 | | | - | 0.9 | - |
| | Härter DYNAPOR VW 420 | | | 1.1 | - | - |

| 2. Technische Daten | | | | | | |
|---|---|---|---|---|---|---|
| 2.1 | Harztemperatur | | °C | 17 | 17 | 17 |
| 2.2 | Gemischtemp. nach Austritt | | °C | 18 | 19 | 19 |
| 2.3 | Bandgeschwindigkeit | | m/min | 2.5 | 4 | 2 |

| 3. PF-Schaumstoff-Eigenschaften | | | | | | |
|---|---|---|---|---|---|---|
| 3.1 | Struktur | | | feinporig | feinporig | feinporig |
| 3.2 | Herstellraumgewicht | | kg/m³ | 48 | 53 | 92 |
| 3.3 | Geschlossenzeiligkeit | | % | 92 | 20 | 5 |
| 3.4 | Wärmeleitfähigkeit | | W/mk | 0.021 | 0.03 | 0.033 |
| 3.5 | Brandverhalten nach DIN 4102/1 | | Klasse | B2 | B1 | A2 |

## Patentansprüche

1. Verfahren zur kontinuierlichen Herstellung von Formkörpern aus chemisch hätte- und schäumfähigen Phenolresolharz-Mischungen,
dadurch gekennzeichnet,
daß die Mischung des Harzansatzes mit einem Doppelschneckenextruder ausgeführt wird.

2. Verfahren nach Anspruch 1,
dadurch gekennzeichnet,
daß die Formgebung der Formkörper in einer Doppelbandpresse erfolgt.

## Claims

1. A method of continuously manufacturing moulded articles from chemically hardenable and foamable phenol resol resin mixtures, characterised in that the resin formulation is mixed by means of a twin-screw extruder.

2. A method according to claim 1, characterised in that the moulded articles are shaped in a twin-belt press.

## Revendications

1. Procédé de fabrication en continu de matières de moulage à partir de mélanges à base de résol phénolique durcissables et expansibles chimiquement, caractérisé en ce crue le mélange de la formulation de résine s'effectue à l'aide d'une extrudeuse à double vis.

2. Procédé selon la revendication 1, caractérisé en ce crue le façonnage des matières à mouler a lieu dans une presse à double bande.
